# EUROPEAN PATENT SPECIFICATION

(11) **EP 0 506 953 B1**
(45) Date of publication and mention of the grant of the patent: **30.07.1997**
(21) Application number: 92902543.5
(22) Date of filing: 10.10.1991
(51) Int. Cl.: B29C 65/02

(54) **ATTACHMENT MECHANISM FOR NONWOVEN THERMOFORMED ARTICLES**
BEFESTIGUNGSMECHANISMUS FÜR AUS NICHTGEWEBTEM MATERIAL WARMGEFORMTE GEGENSTÄNDE
MECANISME DE FIXATION POUR ARTICLES FORMES A CHAUD NON TISSES

(30) Priority: 12.10.1990 US 597472
(43) Date of publication of application: 07.10.1992
(73) Proprietor: GATES FORMED-FIBRE PRODUCTS INC., Auburn Maine 04210 (US)
(72) Inventor: FRANK, George, A., Auburn, ME 04210 (US)
(74) Representative: Colgan, Stephen James
(86) International application number: US9107610
(87) International publication number: WO9208600

(56) References cited:
- DE-A- 2 248 678
- US-A- 3 015 141
- US-A- 3 119 728
- US-A- 3 160 540
- US-A- 4 818 586
- PATENT ABSTRACTS OF JAPAN vol. 9, no. 63 (M-365)(1786) 20 March 1985 & JP,A,59 196 214 ( MIYAKO FURUKAWA ) 7 November 1984 see abstract
- PATENT ABSTRACTS OF JAPAN vol. 11, no. 360 (M-645)(2807) 25 November 1987 & JP, A,62 138 232 ( ARAKAWA SHATAI KOGYO K.K. ) 22 June 1987 see abstract

## Description

### Background of the Invention

### Field of the Invention

This invention relates to thermoformed articles and methods of manufacture thereof and, more particularly, to fastener devices for securing such thermoformed articles to support structures. Specifically, the present invention relates to an improved fastening device which is integrally formed with the thermoformed components at the time of formation of the thermoformed article.

### Description of the Prior Art

Many situations arise where it is desirable to cover irregular surfaces with carpeting material. A common example of this is to cover the trunk of a car with a carpeting material as well as trim areas such as door panels, dash components and the like. In order to work well, such a carpeting material must be capable of taking on irregular, uneven shapes. It must have good hand feel, it must look good, and it must be resistant to the effects of water and soil.

In response to this need, carpet-like material and components have been constructed out of nonwoven, synthetic fibers. These fibers are easy to shape in contour around irregular and uneven surfaces, and if the carpet-like material is attached to a suitable substrate with the appropriate thermal response characteristics, a piece of material can be molded under conditions of pressure and heat to take on the general outline of the area to be carpeted. This particular process is known as thermoforming and has become quite popular in the nonwoven carpet industry. In addition, ways of manufacturing such carpeting as well as cutting and molding the carpeting to a given shape have been developed.

One common approach is to make a soft bulky assembly of fibers, known as a batt, and then attach the batt to carpeting that has been produced from a nonwoven or other available technology. The carpet is attached by a needle loom by pushing the needle downwards into the bulk of fibers. The needle has downwardly-facing barbs on it. In a reverse-fishook principle, the barbs that are being pushed in a downward direction tend to catch fibers and pull them downward so as to thoroughly entangle and intermix the fibers among each other. This results in a batt that has been compressed, and is less likely to fray. The process of running such fibers through the needle loom is commonly known as needle-punching, or simply needling. This particular process is discussed in more detail in U.S. Patent No. 4,424,250, the disclosure and contents of which are specifically incorporated herein by reference, this particular patent being assigned to the assignee of the present invention.

Taking this process a step further, ways have been developed for making nonwoven fiber carpeting that has desirable carpet-like qualities, good hand-feel, an absence of fused, glossy or shiny surface areas which can be shaped around particularly sharp contours, and which have enough stiffness to cover vertical surfaces without having to be affixed onto such a surface. This particular concept evolved into a nonwoven, needle-punched carpeting which formed into a relatively rigid textile panel from a loosely consolidated, nonwoven fibrous batt. The batt may be composed of different types of fibers that have been chosen so that the needle-punching process tends to force one type of the fiber to the surface of the final product. In this manner, a particular substrate may be formed having a concentration of one type of fiber on one surface versus the opposite surface. This particular development is disclosed in U.S. Patent No. 4,818,586, the contents of which are specifically incorporated herein by reference and which has been assigned to the assignee of the present invention.

Alternatively, a carpet may be attached to a nonwoven substrate which may differ in chemical composition from the carpet face via the needle-punching process. Upon exposure to conditions of suitable heat and pressure, the composite will form a relatively rigid panel or shape.

Once a substrate component of sufficient rigidity and contour has been formed, there remains the problem of attaching the component to a support frame or assembly, such as a trunkliner or door panel structure. Attaching mechanical fasteners to automotive, boat and other vehicular trim parts is therefore a necessary fact in the production of these materials. In the past, one form of attaching such fasteners has been simply to glue or in some other way physically attached a fastener to the back surface of the substrate component in a separate, off-line procedure, such as by using standard adhesives, glues and the like.

In another system, certain substrates are formed by undergoing extremely high pressure and temperature during the molding cycle and are able to use fasteners that are embedded in the substrate during the material flow achieved in the forming stage. An advantage to this technique is that the placement of the fastener is consistent from part to part. In addition, a separate, off-line assembly operation is avoided. However, in the past this procedure has only been available for high pressure, high temperature processes which cause material flow during substrate formation so as to embed the fastener within the actual substrate itself. This process has not been usable with low pressure, thermoformed parts where molding of the substrate is accomplished by using only the latent heat of the substrate, since the molds themselves are nonheated. The above fastener embedding process cannot be used in such low pressure thermoformed operations due to the lack of substantial material flow during the forming operation. Thus, there remains a need to provide a fastening system wherein fasteners may be integrally formed with thermoformed components during on-line assembly formation of the component article.

In JP-A-59-196214, there is disclosed a device for attaching a material to a support frame comprising fastener means projecting from a base position. However, the document is not concerned with the attachment of fastening devices to thermoformed or thermoformable materials. In JP-A-60-222214 and JP-A-63-872081, there are also disclosed devices for attaching a material to a support, the devices comprising a fastener means projecting from a base portion. In these two latter documents, the devices are placed in a mould which has to be heated to high temperature to activate a thermosetting phenolic material to attach the base portion to a substrate.

Among the objects of the present invention are to provide a fastening device for thermoformed components and a method for attaching fasteners to thermoformed components during the process of formation of the thermoformed component.

According to the broadest aspect of the present invention, we provide a device for attaching thermoformed substrate material to a support frame comprising fastener means including a base portion and an attachment portion projecting from said base portion (20) for engagement with said support frame, and adhesive means (60 or 80) for securing said base portion (20) to said substrate material (10), characterised in that said adhesive means is thermoplastic and heat activatable at thermoforming temperatures in and is adapted to be activated by the latent heat supplied by the substrate during thermoforming prior to bonding but has a sufficiently high softening point after bonding to prevent flow at temperatures of up to 121.1° Celsius (250°F).

In one particular embodiment, the adhesive mechanism is in the form of a nonwoven, needle-punched fibre sheet having first and second surfaces. The sheet sandwiches the fastener base portion between the first surface of the sheet and the back surface of the substrate material. The sheet defines a central aperture having a width dimension sufficiently great to permit the fastener attachment portion to project therethrough yet sufficiently narrow to enable the sheet to overlay the fastener base portion. The sheet includes an enriched area of lower melting point fibre disposed proximate the first surface thereof and activatable to bond the first surface of the sheet to the back surface of the substrate material without material flow and at a temperature utilised to thermoform the substrate material, thereby securing the fastener base portion to the substrate material.

In another preferred embodiment of the invention, the adhesive mechanism is in the form of an effective amount of a hot melt adhesive material placed on the rear surface of the base portion. This material is designed for reactivation by the latent heat from the substrate to bond between the fastening device base portion and the thermoformed component during the thermoforming process.

In addition, a method of integrally attaching a fastener device to the back surface of a thermoformed textile component formed from substrate material through the use of paired mold halves during the process of thermoforming thereof is disclosed. The fastening device includes a base portion with front and rear surfaces and a connecting portion extending from the base portion. The method includes creating a recessed portion in the molding surface of the mold half responsible for forming the back surface of the thermoformed component. The recessed portion is sized and shaped to receive the fastening device. The fastening device is then positioned within the recessed portion with the rear surface of the base portion facing outwardly from the molding surface. A heat activatable adhesive mechanism is also placed within the recessed portion, and the substrate is then heated. The heated substrate is then thermoformed between the mold halves to form the textile component such that the latent heat from the component softens and reactivates the adhesive mechanism to secure the rear surface of the fastening device base portion against the back surface of the component. Finally, the mold halves are removed, and the component and adhesive mechanism cooled to firmly attach the fastening device to the component.

In one preferred form of the invention, the adhesive mechanism is in the form of a patch of nonwoven, preferentially needled and thermobonded fibers having an enriched first surface of lower melting point bonding fibers. A central aperture is created in the patch. The base of the fastener is positioned against the back surface of the textile component and the patch is placed against the back surface of the component with the fastener connecting portion extending through the aperture in the patch, the enriched first surface of the patch being placed adjacent to the back surface of the textile component. This may be done as a separate step or in conjunction with mold closure during the thermoforming process. The textile substrate is then thermoformed to form the thermoformed component such that the latent heat from the component softens and melts the enriched surface of the patch to bond the patch to the component and trap the fastener between the patch and the back surface of the component to integrally mold the same therein.

### Brief Description of the Drawings

Fig. 1 is a side schematic, with some parts in section, illustrating placement of the fastener and an adhesive patch in the mold during the process in one embodiment of the invention;
Fig. 2 is a schematic similar to Fig. 1 which shows placement of the textile substrate in position over the patch as well as the second half of the mold;
Fig. 3 is a schematic similar to that of Figs. 1 and 2 illustrating a completed thermoformed component using one embodiment of the invention with integrally bonded fastener removed from the mold;
Fig. 4 is a front perspective view of one embodiment of the fastening device useful in the present invention;
Fig. 5 is a front perspective view of yet another fastener embodiment useful with the present invention;
Fig. 6 is a top plan view of the thermoformed component with integrally molded fastener of Fig. 3 taken substantially along line 6-6 of Fig. 3; and
Fig. 7 is a front perspective sectional view illustrating placement of the base of the fastening device of Fig. 4 within a mold in yet another embodiment of the present invention.

### Detailed Description of the Preferred Embodiments

One important aspect of the present invention is that it avoids using substrate material flow during molding in order to secure the fastener system to the back of the molded parts as in certain prior devices. The present invention retains the advantage of in-mold application, resulting in the correct placement of fasteners in a low pressure, thermoforming system. Moreover, off-line assembly using various adhesives, glue, and the like is also avoided, which system tends to fail over time and results in improper placement of fasteners.

The present invention utilizes the latent heat available from the heated substrates during the thermoforming process to activate the fastener retention material to bond the fastener to the substrate during thermoforming. In one preferred embodiment of the invention, a retention patch is used as the adhesive mechanism. The patch includes a mixture of lower melting point fibers and reinforcing fibers which have been preferably preferentially needled and thermally bonded to achieve an enriched surface of the lower melting point fibers using techniques disclosed in detail in U.S. Patent No. 4,818,586, the contents of which have already been previously incorporated and will not be specifically discussed except as needed herein. However, it is to be understood that the techniques and disclosure of the referenced patent are to be included for use as part of the present disclosure. Moreover, it should also be noted that while the detailed description and specific embodiments of the invention as discussed herein are directed toward attaching fastener devices to nonwoven, textile-type substrates, the present invention is not to be so limited and may in fact be utilized with any type of thermoformed substrate component such as extruded polypropylene substrate, plastic coated cloth or carpet, or the like.

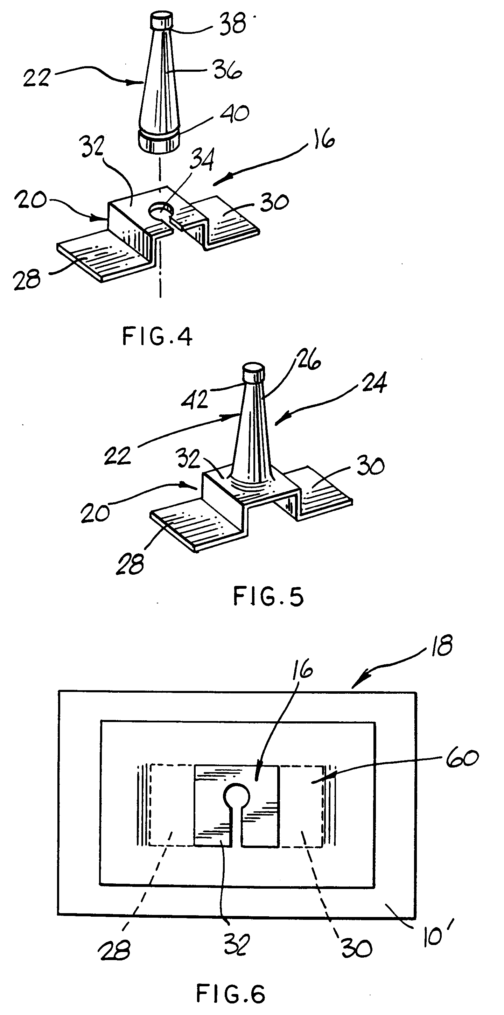

Referring now to the embodiments illustrated in rigs. 1-6, a nonwoven, needle-punched fiber substrate 10 is formed preferably utilizing the process disclosed in U.S. Patent No. 4,818,586. It should be understood, however, that any type of thermoforming textile substrate may be utilized with the present invention. The substrate 10 includes a front surface 12 and a back surface 14. A fastener device 16 is integrally incorporated into the final thermoformed component 18 and includes in general a base member 20 and an attachment portion 22. Referring particularly to Figs. 4 and 5, the embodiment of Fig. 4 illustrates one preferred fastener device 16 that includes a removable attachment portion 22, while the embodiment in Fig. 5 illustrates yet another preferred fastener device 24 having an integrally molded and unitary connecting portion 26.

In the first embodiment of the fastener 16 of Fig. 4, the base member 20 includes a pair of wing members or flanges 28, 30 projecting outwardly from a raised head portion 32 which is in the form of a platform or land surface. The platform 32 includes a keyway 34 cut therein for receiving the selectively detachable connecting member 22. The attachment portion 22 preferably includes a portion 36 which is designed to snap-fit into an aperture in any structural support member (not illustrated) and is maintained therein by grooves 38. An annular groove or channel 40 is disposed around the base portion of the attachment portion 22 and is sized and shaped for firm connection within the key 34. In this manner, the fastener 16 may be molded into the substrate 10 by simply molding the base member 20 and then attaching the attachment portion 22 after the textile component has been thoroughly formed.

In the alternate fastener embodiment illustrated in Fig. 5, the base member 20 includes the wings of flanges 28, 30 as in the prior embodiment. However, the head portion 32 includes the integral connecting portion 26 having a notch 42 therein for connecting to a structural support member. In this instance, the fastener 24 including the connecting portion 26 is entirely formed with the substrate 10, with appropriate modifications to the mold being made as described below.

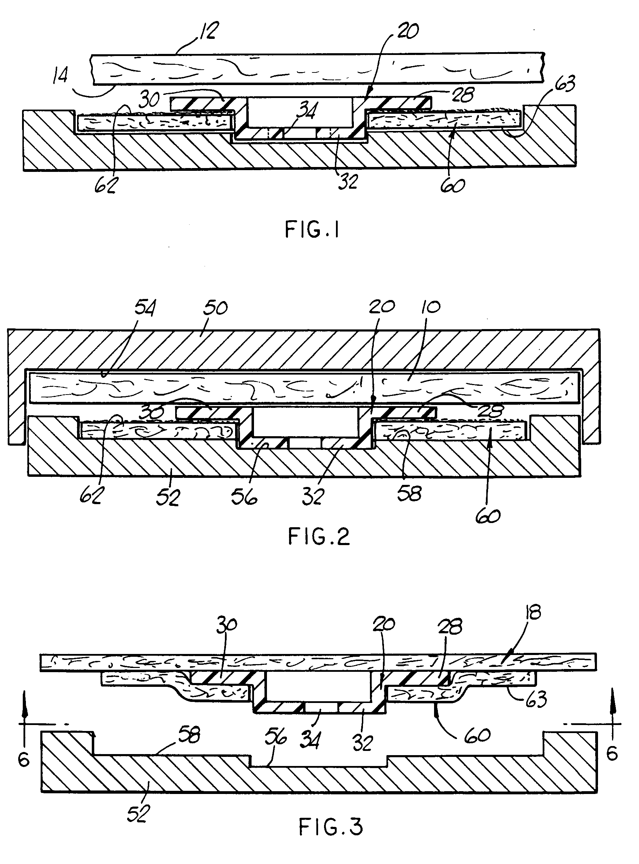

Referring more particularly now to Figs. 1-3 and 6, the textile substrate 10 is thermoformed by first heating it as in the process disclosed in U.S. Patent No. 4,818,586 and then placing it between two mold halves 50 and 52. In the preferred from, the substrate is heated to a temperature of approximately 148.9-176.7°C (300-350°F). The mold halves 50 and 52 are sized and shaped to provide the desired contouring of the final thermoformed component 18. More particularly, the substrate 10 is placed within the recess 54 of the mold half 50, and a recess 56 is provided in the mold half 52 for placing the base portion 20 of the fastener 16. In this embodiment, the recessed area is provided in two parts or portions to accommodate the adhesive mechanism utilized in this embodiment. As illustrated, a second recessed portion 58 is provided circumferentially around the recessed portion 56 at a slightly less depth than the recess 56 and is sized and shaped for receiving an adhesive retention patch 60. In this manner, the fastener 20 and the patch 60 may be placed within the mold half 52 for bonding to the substrate 10 during the process of thermoforming of the substrate 10 into the component 18.

The patch 60 is used to sandwich the base portion 20 of the fastener 16 between the patch 60 and the substrate material 10 as illustrated clearly in Figs. 1-3 and 6. The patch 60 is preferably made up of a nonwoven needle-punched fiber sheet having first and second surfaces 62, 63. The sheet is made in accordance with the process disclosed in U.S. Patent No. 4,818,586 and is formed from a first bonding fiber having a lower melting point or softening point and a second fiber having a melting or softening point higher than the first fiber. The temperature differentials between the melting or softening points of the first and second fibers are such that the first bonding fiber will melt at the temperatures generally used to thermoform the substrate 10 into the component 18, that is about 148.9-176.7°C (300-350°F). The melting point of the second reinforcing fiber is such that it will remain intact and unaffected by the temperatures used to thermoform the substrate 10.

The patch 60 is formed by forming a sheet of the nonwoven, needle-punched fiber material and then preferentially needling the material so as to form the first surface 62 enriched in the lower melting point, bonding fiber. The sheet of the material is then preferably heated by running it through an air thermal bonding oven of standard design at a sufficiently high temperature, such as about 121.1-148.9°C (250°-300°F) in order to melt or soften the lower melting point, bonding fibers while leaving the reinforcing fibers unaffected. This first heating and bonding operation insures a low elongation material which is necessary to prevent patch "stretch" from releasing the fastener base portion 20 when a load is applied to the fastener 16 during use of the component 18.

The fiber sheet is then cut to a predetermined size to form the patch 60, and an aperture is then cut in the center of the patch 60 through which the head portion 32 of the fastener 16 will protrude. The patch is also cut to a sufficient size so that an effective amount of the patch 60 extends beyond the ends of the wings 28, 30 of the base portion 20, preferably a minimum of 3/4 inches past all sides of the fastener 16. This sizing of the patch 60 is preferred in order to allow adequate bonding area about the base portion 20. The patch 60 is then placed over the fastener base portion 20 so that the head portion 32 protrudes therethrough, and this combination is then placed against the back surface 14 of the substrate 10. The substrate 10 is then thermoformed, and the bonding fibers of the patch 60 are reactivated so that the patch 60 conforms and molds about the fastener base portion 20 so as to bond both to the fastener 20 as well as to the back surface 14 of the thermally bonded substrate 10.

In order to achieve this construction, the patch 60 and the fastener base portion 20 are loaded into the specially designed recesses 56, 58 in the molding half 52 with the lower melting fiber enriched side 62 of the patch 60 facing the substrate 10. The sizing of the recesses 56, 58 is very important in that insufficient clearance will result in visual disturbances of the face side 12 of the thermally formed component 18 in the form of bumps, resin strike-through from the substrate, and the like. Too large a clearance will not promote good bond formation. Ideally, the fastener 16 has some feature which aids in location and retention in the mold recess. In the embodiment illustrated in Fig. 5, this mold location feature could be combined with the integrally molded connecting portion 26 which would have to be positioned within an aperture (not illustrated) or the like in the recess 56.

During the molding operation itself, contact between the heated substrate 10 and the patch 60 is made at mold closure. The substrate is first heated to about 300-350°F and then placed between the molds 50, 52 (see U.S. Patent No. 4,818,586). The latent heat from the substrate 10 softens and reactivates the enriched surface 62 of the patch 60 and forms the bond, thus trapping the fastener base portion 20 between the patch 60 and the substrate 10. Mold cooling is performed as usual, after which the resulting component 18 is removed from the mold cavity with the fastener 16 integrally formed in place. In the embodiment illustrated in Figs. 1-3 and 6, only the fastener base portion 20 is integrally molded into the component 18. In this embodiment, the next step is required wherein the connecting portion 22 is snap-fit into the head portion 32 of the base portion 20 so that the groove 40 is matched with the key 34 thereby forming the completed fastener 16.

It should be understood that a wide variety of different fibrous materials may be utilized in this embodiment of the present invention, and that more than just two fibers may be utilized in the patch 60 and/or the substrate 10. It is also envisioned that a single fiber of bicomponent nature, for example, a core of higher melting polymer surrounded by a sheath of a lower melting component, may be utilized in the construction of the patch 60 and/or the substrate 10. For purposes of illustration and discussion, only two fiber types are specifically disclosed and discussed although additional numbers of fibers are envisioned within the scope of the present invention as well as the bicomponent fiber discussed above. In the preferred embodiment, polyethylene fiber is utilized as the low melting point fiber in the patch 60 while polypropylene fiber is utilized as a reinforcing fiber in the patch 60. In a specific example of a preferred embodiment, one preferred construction for the patch 60 includes utilizing a dry laid needle-punch nonwoven material of approximately 15 oz./yd² comprised of 60-80 percent 30 denier polyethylene fibers and 20-40 percent of 16-18 denier polypropylene fibers. These fibers are carded, cross-lapped and needle-punched with approximately 800 ppsi (penetrations per square inch) using a medium efficiency 32 gauge felting needle at a depth of about 13 mm penetration. This material was run through an air thermal bonding oven at a temperature of approximately 270°F in order to melt the polyethylene fibers while leaving the polypropylene reinforcing fibers unaffected. This particular patch was then attached to a substrate as described above. The resulting fastener 16 was integrally bonded to the component 18 as illustrated in Fig. 6 in very firm fashion without any patch stretch when a load was applied.

The fastener 16 or 24 may be constructed from any appropriate material and is preferably made from a plastic material capable of withstanding the temperatures of thermoforming without any changes in structure or form.

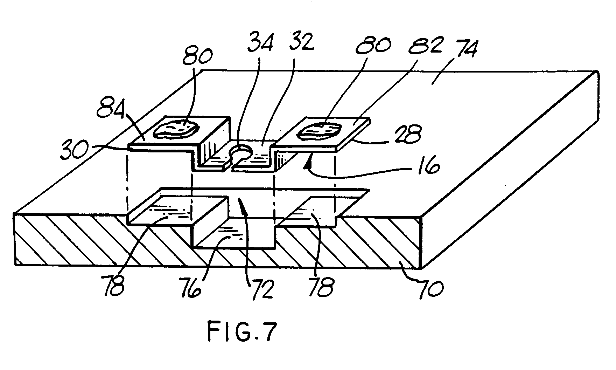

Turning now to Fig. 7, an alternate preferred embodiment of the invention shows the fastener 16 with the base portion 20 having the flanges 28, 30 projecting from the head portion 32 as in Figs. 1-4. The mold member 70 includes a recessed portion 72 in the molding surface 74 thereof. The recessed portion 72 includes a first recessed area 76 and second recessed areas 78 to receive, respectively, the head portion 32 and the flanges 28, 30.

In this particular embodiment, the adhesive mechanism includes effective amounts of thermoplastic hot melt adhesive material 80 placed on the rear surface 82, 84 of the flanges 28, 30. The amount of adhesive necessary is dependent on the size of the flanges 28, 30, the absorption or wetting capability of the substrate 10 (Figs. 1-3), and the actual material selected for use as the adhesive 80. Once the adhesive material 80 has been applied to the surfaces 82, 84, the mold halves are closed as in the prior embodiment, and the adhesive 80 bonds under the latent substrate heat to both the flanges 28, 30, and the compressed, thermoformed substrate 10. Upon removal of the mold halves and cooling of the thermoformed component, the fastener 16 is secured directly to the component.

In preferred form, the adhesive material 80 may be any type of adhesive that is thermoplastic in nature and is reactivatable (meltable) under the temperatures utilized in thermoforming, ie., 300-350°F. The material 80 must also have a sufficiently high softening point after bonding and cooling so as to prevent flow at temperatures of up to 121.1°C (250°F) the temperature to which the thermoformed components are generally tested. The adhesive material is preferably resistant to high temperatures and is a hot melt adhesive. However, non-hot melts may also be utilized such as solvent-based solution, water-based emulsions and colloidal suspensions.

The most preferred adhesive material is of the slow cross-linking variety, in particular urethanes. When these materials are used, they are thermoplastic when applied to the flanges 28, 30, and gel during the thermoformation process. Once the component has been formed and removed from the mold, moisture in the atmosphere will begin the cross-linking process whereby the adhesive cross-links to thermoset, thereby ensuring permanent attachment and high temperature resistance of the fastener 32. One particular example of such a slow cross-linking urethane is Moisture Cure Hot Melt urethanes available from Bostic Co., Middleton, MA. This particular embodiment of the invention is especially useful when fasteners are required to be located extremely close to the edge of the thermoformed component.

As a result of the above, it can be seen that an improved fastening system or device for thermoformed textile components is provided wherein the fastener is integrally molded into the thermoformed component part itself. The fastener is capable of withstanding substantial loads without stretch or without failure. Using the process of the present invention, fasteners can be positioned in the same place time after time, part after part, to insure uniformity in the formation of automobile components or other similar assembly line components utilizing thermoformed textile materials. The present invention is particularly efficient in that it provides a strong fastening system without additional off-line or off-assembly steps as previously required with thermoformed components. Consequently, an improved product is provided at a reduced cost with greater uniformity of manufacture.

The foregoing description and the illustrative embodiments of the present invention have been shown in the drawings and described in detail in varying modifications and alternate embodiments. It should be understood, however, that the foregoing description of the invention is exemplary only, and that the scope of the invention is limited only to the claims as interpreted in view of the prior art.

## Claims

1. A device for attaching thermoformed substrate material (10) to a support frame comprising fastener means (16) including a base portion (20) and an attachment portion (22) projecting from said base portion (20) for engagement with said support frame, and adhesive means (60 or 80) for securing said base portion (20) to said substrate material (10), characterised in that said adhesive means is thermoplastic and heat activatable at thermoforming temperatures and is adapted to be activated by the latent heat supplied by the substrate during thermoforming prior to bonding but has a sufficiently high softening point after bonding to prevent flow at temperatures of up to 121.1° Celsius (250°F).

2. The device as claimed in claim 1, wherein said base portion (20,28,30) is aligned against the back surface (14) of said substrate material (10).

3. The device as claimed in claim 2, wherein said base portion (20,28,30) includes a pair of wing members (28,30) aligned opposite each other, sized and shaped to be sandwiched between a non-woven needle punched sheet (60) and said substrate material (10).

4. The device as claimed in claim 3, wherein said base portion (20,28,30) further includes a central head member (32) in the form of a raised platform to which said wing members (28,30) are attached, said platform (32) extending through an aperture in said sheet (60) and projecting above the level of the second surface (63) of said sheet (60), said attachment portion (22) projecting outwardly from said raised platform (32).

5. The device as claimed in claim 4, wherein said attachment portion (22) is selectively detachable from said platform (32).

6. The device as claimed in claim 4, 5 or 6, wherein said sheet comprises a mixture of lower melting point bonding fibres and reinforcing fibres having a melting point higher than said bonding fibres, said lower melting point bonding fibres being softened and rehardened so as to fuse to one another and to the reinforcing fibres as well as to the substrate material to bond said sheet to said substrate material (10).

7. The device as claimed in claim 6, wherein the said sheet (60) is preferentially needled so as to create an enriched area of lower melting point bonding fibres along a first surface (62) of said sheet.

8. A device according to any one of claims 4-7, wherein the sheet (60) comprises a non-woven, needle-punched fibre patch, a second surface of which is formed predominantly of thermoplastic reinforcing fibres which, during needle-punching, have been preferentially snagged from a batt of said reinforcing fibres in a mixture with other thermoplastic bonding fibres having a lower temperature softening point than said reinforcing fibres, by needle barbs of a needle loom and then selectively driven to the second surface of said patch, and wherein a first surface of the patch is formed predominantly of such other lower temperature softening point bonding fibres, at least a portion of which have been softened and rehardened so as to fuse to one another and to said reinforcing fibres to at least partially anchor the reinforcing fibres, and wherein the lower softening point temperature bonding fibres are activatable to bond the first surface (62) of said patch (30) to the back surface (14) of said substrate material (10) without material flow and at a temperature utilised to thermoform said substrate material to secure said base portion (20,28,30) to said substrate material (10) during the thermoforming thereof.

9. The device as claimed in claim 2, wherein said adhesive means comprises a non-woven, needle-punched fibre sheet (60) having first and second surfaces and sandwiching said base portion between the first surface of said sheet and the back surface of said substrate material, said sheet defining a central aperture having a width dimension sufficiently great to permit said attachment portion of said fastener to project therethrough yet sufficiently narrow to enable said sheet to overlay said base portion, said sheet comprising an enriched area of lower melting point fibre disposed proximate said first surface and activatable to bond the first surface of said sheet to the back surface of said substrate material (10) without material flow and a temperature utilised to thermoform said substrate material to secure said base portion to said substrate material.

10. A method of attaching a fastening device (24) to the back surface (14) of a thermoformable textile component formed from substrate material (10) through the use of paired mould halves, said fastening device (24) having a base portion (20,28,30) with front and rear surfaces and a connecting portion (22) extending from said base portion (20), said method comprising the steps of creating a recessed portion (56) in the moulding surface (58,60) of the said mould half (52) responsible for forming the back surface of the thermoformable component, said recessed portion being sized and shaped to receive said fastening device (20), positioning said fastening device (20) within the said recessed portion (56) with the rear surface of said base portion (20,28,30) facing outwardly from said moulding surface (56,60), placing heat activatable adhesive means (60 or 80) within said recess, heating said substrate material (10), thermoforming said heated substrate material (10) between said mould halves (50,52), which are cooled, to form said textile component such that the latent heat from the said component softens and activates said adhesive means (60 or 80) to secure the rear surface of said fastening device base portion (20,28,30) against the back surface (14) of said component, and cooling said thermoformed component and said adhesive means (60 or 80) in the mould to set the adhesive and firmly attach said fastening device (20) to said component and thereafter removing said mould halves (50,52).

11. The method as claimed in claim 10, wherein said adhesive means (60) comprises a patch of non-woven, preferentially needled and thermobonded fibres having an enriched first surface of lower melting point bonding fibres, said patch (60) having a central aperture through which said connecting portion (20,32) passes, and wherein said patch (60) is placed within said recess (56) with said first surface facing outwardly prior to positioning said fastening device (20) within said recess (56) so as to sandwich said base portion (20,28,30) between said patch (60) and said substrate material (10) when thermoforming said substrate material (10), the latent heat from said substrate material (10) softening and reactivating the enriched surface of said patch (60) without material flow to bond said patch (60) to said component.

12. A method according to claim 11, wherein said patch (60) is thermoplastic and heat activatable at thermoforming temperatures prior to bonding and has a sufficiently high softening point after bonding to prevent flow at temperatures of up to about 121.1°C (250°F).

13. The device as claimed in claim 1 or the method as claimed in claim 10, wherein said adhesive means comprises an effective amount of a hot melt adhesive material on the rear surface of said base portion for reactivation by the latent heat from the said substrate to bond between said fastening device base portion and said thermoformed component.

14. A device according to claim 1 for attaching thermoformed substrate material (10) having front (12) and back (14) surfaces to a support frame wherein the adhesive means comprises
a non-woven, needle-punched fibre sheet (60) comprising a mixture of lower melting point bonding fibres and reinforcing fibres having a melting point higher than said bonding fibres, the sheet (60) having first (62) and second (63) surfaces, said base portion (20) being sandwiched between the first surface (62) of said sheet (10) and the back surface (14) of said substrate material (10), said sheet defining a central aperture having a width dimension sufficiently great to permit said attachment portion (22) to project therethrough yet sufficiently narrow to enable said sheet to overlay said base portion (20,28,30), said sheet (60) comprising an enriched area of lower melting point bonding fibres disposed proximate said first surface (62) and activatable to bond the first surface (62) of said sheet (60) to the back surface (14) of said substrate material (10) without material flow and at a temperature utilised to thermoform said substrate material to secure said base portion (20,28,30) to said substrate material (10), and said lower melting point bonding fibres being softened and rehardened so as to fuse to one another and to the reinforcing fibres as well as to the substrate material (10) to bond said sheet (60) to said substrate material (10).

## Patentansprüche

1. Vorrichtung zum Befestigen von warmgeformtem Substratmaterial (10) an einem Tragrahmen, mit Befestigungsmitteln (16), die ein Basisteil (20) und ein Befestigungsteil (22) umfassen, wobei das Befestigungsteil von dem Basisteil (20) vorspringt, um in den Tragrahmen einzugreifen, und Klebemitteln (60 oder 80), um das Basisteil (20) an dem Substratmaterial (10) zu befestigen, dadurch gekennzeichnet, daß die Klebemittel bei Warmformtemperaturen thermoplastisch und wärmeaktivierbar sind, und ausgelegt sind, um vor dem Verbinden durch die von dem Substrat bei dem Warmformen gelieferte Wärme aktiviert zu werden, aber nach dem Verbinden einen genügend hohen Erweichungspunkt haben, um Fließen bei Temperaturen bis zu 121,1° Celsius (250°F) zu verhindern.

2. Vorrichtung gemäß Anspruch 1, wobei das Basisteil (20, 28, 30) an der hinteren Oberfläche (14) des Substratmaterials (10) anliegt.

3. Vorrichtung gemäß Anspruch 2, wobei das Basisteil (20, 28, 30) ein Paar fluchtende, einander gegenüberliegende Flügelelemente (28, 30) umfaßt, die eine solche Größe und Form haben, daß sie zwischen einem nicht gewebten, genadelten Vlies (60) und dem Substratmaterial (10) angeordnet werden können.

4. Vorrichtung gemäß Anspruch 3, wobei das Basisteil (20, 28, 30) weiterhin ein mittleres Kopfelement (32) in Form einer erhöhten Plattform umfaßt, an dem die Flügelelemente (28, 30) befestigt sind, wobei sich die Plattform (32) durch eine Öffnung in dem Vlies (60) erstreckt, und über das Niveau der zweiten Oberfläche (63) des Vlieses (60) vorspringt, und das Befestigungsteil (22) von der erhöhten Plattform (32) nach außen vorspringt.

5. Vorrichtung gemäß Anspruch 4, wobei das Befestigungsteil (22) von der Plattform (32) in selektiver Weise abnehmbar ist.

6. Vorrichtung gemäß Anspruch 4, 5 oder 6, wobei das Vlies ein Gemisch von Bindefasern mit einem niedrigeren Schmelzpunkt und Verstärkungsfasern, die einen höheren Schmelzpunkt als die Bindefasern haben, aufweist, wobei die Bindefasern mit einem niedrigeren Schmelzpunkt erweicht und wieder erhärtet werden, so daß sie miteinander und mit den Verstärkungsfasern, sowie mit dem Substratmaterial verschmelzen, um das Vlies mit dem Substratmaterial (10) zu verbinden.

7. Vorrichtung gemäß Anspruch 6, wobei das Vlies (60) vorzugsweise so genadelt ist, daß ein angereichertes Gebiet mit Bindefasern mit einem niedrigeren Schmelzpunkt längs einer ersten Oberfläche (62) des Vlieses erzeugt wird.

8. Vorrichtung gemäß irgendeinem der Ansprüche 4-7, wobei das Vlies (60) einen nicht gewebten, genadelten Faserflicken aufweist, bei dem eine zweite Oberfläche überwiegend aus thermoplastischen Verstärkungsfasern gebildet ist, die bei dem Nadeln vorzugsweise aus einem Filz aus Verstärkungsfasern in einem Gemisch mit anderen thermoplastischen Bindefasern, die einen niedrigeren Erweichungspunkt als die Verstärkungsfasern haben, durch Nadel-Widerhaken eines Nadelwebstuhls erfaßt wurden, und dann in selektiver Weise zu der zweiten Oberfläche des Flickens gezogen wurden, und wobei eine erste Oberfläche des Flickens überwiegend aus solchen anderen Bindefasern mit einem niedrigeren Erweichungspunkt gebildet ist, von denen mindestens ein Teil erweicht und wieder erhärtet wurde, so daß sie miteinander und mit den Verstärkungsfasern verschmolzen wurden, um die Verstärkungsfasern zumindest teilweise zu verankern, und wobei die Bindefasern mit einem niedrigeren Erweichungspunkt aktivierbar sind, um die erste Oberfläche (62) des Flickens (30) mit der hinteren Oberfläche (14) des Substratmaterials (10) ohne Materialfließen und bei einer Temperatur, die verwendet wird, um das Substratmaterial warmzuformen, zu verbinden, um das Basisteil (20, 28, 30) bei dem Warmformen an dem Substratmaterial (10) zu befestigen.

9. Vorrichtung gemäß Anspruch 2, wobei die Klebemittel ein nicht gewebtes, genadeltes Faservlies (60) aufweisen, das eine erste und eine zweite Oberfläche hat, und das Basisteil zwischen der ersten Oberfläche des Vlieses und der hinteren Oberfläche des Substratmaterials angeordnet ist, das Vlies eine zentrale Öffnung definiert, deren Breitenabmessung groß genug ist, um zu ermöglichen, daß das Befestigungsteil der Befestigungsmittel durch diese Öffnung vorspringt, aber dennoch klein genug ist, um zu ermöglichen, daß das Vlies das Basisteil bedeckt, und das Vlies ein angereichertes Gebiet mit Fasern mit einem niedrigeren Schmelzpunkt aufweist, das nahe bei der ersten Oberfläche liegt, und aktivierbar ist, um die erste Oberfläche des Vlieses mit der hinteren Oberfläche des Substratmaterials (10) ohne Materialfließen und bei einer Temperatur, die verwendet wird, um das Substratmaterial warmzuformen, zu verbinden, um das Basisteil an dem Substratmaterial zu befestigen.

10. Methode zum Befestigen einer Befestigungsvorrichtung (24) an der hinteren Oberfläche (14) einer aus Substratmaterial (10) gebildeten, warmformbaren Textilkomponente unter Verwendung von paarweisen Formhälften, wobei die Befestigungsvorrichtung (24) ein Basisteil (20, 28, 30) mit einer vorderen und einer hinteren Oberfläche, und ein von dem Basisteil (20) ausgehendes Verbindungsteil (22) hat, wobei die Methode die Schritte aufweist, bei denen ein ausgesparter Bereich (56) in der Formungsfläche (58, 60) der Formhälfte (52), mit der die hintere Oberfläche der warmformbaren Komponente gebildet wird, erzeugt wird, wobei der ausgesparte Bereich eine Größe und Form hat, um die Befestigungsvorrichtung (20) aufzunehmen, die Befestigungsvorrichtung (20) innerhalb des ausgesparten Bereichs (56) positioniert wird, wobei die hintere Oberfläche des Basisteils (20, 28, 30) von der Formungsfläche (56, 60) nach außen gerichtet ist, die wärmeaktivierbaren Klebemittel (60 oder 80) innerhalb der Aussparung angeordnet werden, das Substratmaterial (10) erwärmt wird, das erwärmte Substratmaterial (10) zwischen den Formhälften (50, 52), die gekühlt werden, warmgeformt wird, um die Textilkomponente zu bilden, so daß die latente Wärme von der Komponente die Klebemittel (60 oder 80) erweicht und aktiviert, um die hintere Oberfläche des Basisteils (20, 28, 30) der Befestigungsvorrichtung an der hinteren Oberfläche (14) der Komponente zu befestigen, und die warmgeformte Komponente und die Klebemittel (60 oder 80) in der Form abgekühlt werden, um den Kleber fest werden zu lassen, und die Befestigungsvorrichtung (20) an der Komponente fest zu befestigen, und danach die Formhälften (50, 52) entfernt werden.

11. Methode gemäß Anspruch 10, wobei die Klebemittel (60) einen Flicken aus nicht gewebten vorzugsweise genadelten und warmgebundenen Fasern aufweist, das eine angereicherte, erste Oberfläche mit Bindefasern mit einem niedrigeren Schmelzpunkt hat, der Flicken (60) eine zentrale Öffnung hat, durch die das Verbindungsteil (20, 32) hindurchgeht, und wobei der Flicken (60) mit nach außen gerichteter, erster Oberfläche innerhalb der Aussparung (56) angeordnet wird, bevor die Befestigungsvorrichtung (20) innerhalb der Aussparung (56) positioniert wird, so daß das Basisteil (20, 28, 30) zwischen dem Flicken (60) und dem Substratmaterial (10) angeordnet ist, wenn das Substratmaterial (10) warmgeformt wird, wobei die latente Wärme von dem Substratmaterial (10) die angereicherte Oberfläche des Flickens (60) ohne Materialfließen erweicht und reaktiviert, um den Flicken (60) mit der Komponente zu verbinden.

12. Methode gemäß Anspruch 11, wobei der Flicken (60) vor dem Verbinden bei Warmformtemperaturen thermoplastisch und wärmeaktivierbar ist, und nach dem Verbinden einen genügend hohen Erweichungspunkt hat, um Fließen bei Temperaturen bis zu ungefähr 121,1°C (250°F) zu verhindern.

13. Vorrichtung gemäß Anspruch 1, oder Methode gemäß Anspruch 10, wobei die Klebemittel eine wirksame Menge eines Schmelzklebermaterials auf der hinteren Oberfläche des Basisteils aufweisen zur Reaktivierung durch die latente Wärme von dem Substrat, um das Basisteil der Befestigungsvorrichtung mit der warmgeformten Komponente zu verbinden.

14. Vorrichtung gemäß Anspruch 1 zum Befestigen von warmgeformtem Substratmaterial (10), das eine vordere Oberfläche (12) und eine hintere Oberfläche (14) hat, an einem Tragrahmen, wobei die Klebemittel ein nicht gewebtes genadeltes Faservlies (60) aufweisen, das ein Gemisch von Bindefasern mit einem niedrigeren Schmelzpunkt und Verstärkungsfasern, die einen höheren Schmelzpunkt als die Bindefasern haben, aufweist, das Vlies (60) eine erste Oberfläche (62) und eine zweite Oberfläche (63) hat, das Basisteil (20) zwischen der ersten Oberfläche (62) des Vlieses (10) und der hinteren Oberfläche (14) des Substratmaterials (10) angeordnet ist, das Vlies eine zentrale Öffnung definiert, die eine Breitenabmessung hat, die groß genug ist, um zu ermöglichen, daß das Befestigungsteil (22) durch die Öffnung vorspringt, aber dennoch klein genug ist, um zu ermöglichen, daß das Vlies das Basisteil (20, 28, 30) bedeckt, das Vlies (60) ein angereichertes Gebiet mit Bindefasern mit einem niedrigeren Schmelzpunkt aufweist, das nahe bei der ersten Oberfläche (62) angeordnet ist, und aktivierbar ist, um die erste Oberfläche (62) des Vlieses (60) mit der hinteren Oberfläche (14) des Substratmaterials (10) ohne Materialfließen und bei einer Temperatur, die verwendet wird, um das Substratmaterial warmzuformen, zu verbinden, um das Basisteil (20, 28, 30) an dem Substratmaterial (10) zu befestigen, und die Bindefasern mit einem niedrigeren Schmelzpunkt erweicht und wieder erhärtet werden, so daß sie miteinander und mit den Verstärkungsfasern, sowie mit dem Substratmaterial (10) verschmelzen, um das Vlies (60) mit dem Substratmaterial (10) zu verbinden.

## Revendications

1. Dispositif pour fixer un matériau de substrat formé à chaud (10) à un cadre porteur comprenant un moyen de fixation (16) comportant une partie de base (20) et une partie de fixation (22) débordant de ladite partie de base (20) pour engagement avec ledit cadre porteur, et des moyens adhésifs (60 ou 80) pour fixer ladite partie de base (20) audit matériau de substrat (10), caractérisé en ce que lesdits moyens adhésifs sont thermoplastiques et activables à la chaleur à des températures de formage à chaud et sont adaptés pour être activés par la chaleur latente fournie par le substrat pendant le formage à chaud avant liaison mais présentent un point de ramollissement suffisamment élevé après liaison pour empêcher l'écoulement à des températures jusqu'à 121,1°C (250°F).

2. Dispositif selon la revendication 1, dans lequel ladite partie de base (20, 28, 30) est alignée contre la surface arrière (14) dudit matériau de substrat (10).

3. Dispositif selon la revendication 2, dans lequel ladite partie de base (20, 28, 30) comprend une paire d'éléments à ailettes (28, 30) alignés en vis-à-vis, dimensionnés et formés pour être pris en sandwich entre une feuille aiguilletée non tissée (60) et ledit matériau de substrat (10).

4. Dispositif selon la revendication 3, dans lequel ladite partie de base (20, 28, 30) comprend en outre un élément de tête central (32) sous la forme d'une plate-forme surélevée à laquelle lesdits éléments à ailettes (28, 30) sont fixés, ladite plate-forme (32) traversant une ouverture dans ladite feuille (60) et étant en saillie au-dessus du niveau de la deuxième surface (63) de ladite feuille (60), ladite partie de fixation (22) étant en saillie vers l'extérieur de ladite plate-forme surélevée (32).

5. Dispositif selon la revendication 4, dans lequel ladite partie de fixation (22) est sélectivement détachable de ladite plate-forme (32).

6. Dispositif selon l'une quelconque des revendications 4, 5 ou 6, dans lequel ladite feuille comprend un mélange de fibres de liaison à faible point de fusion et des fibres de renfort ayant un point de fusion supérieur à celui desdites fibres de liaison, lesdites fibres de liaison à faible point de fusion étant ramollies et redurcies afin de les unir entre elles et aux fibres de renfort ainsi qu'au matériau de substrat pour lier ladite feuille audit matériau de substrat (10).

7. Dispositif selon la revendication 6, dans lequel ladite feuille (60) est de préférence aiguilletée afin de créer une zone enrichie de fibres de liaison à faible point de fusion le long d'une première surface (62) de ladite feuille.

8. Dispositif selon l'une quelconque des revendications 4 à 7, dans lequel la feuille (60) comprend une pièce en fibres aiguilletées non tissées, dont une deuxième surface est formée d'une manière prédominante de fibres de renfort thermoplastiques qui, pendant l'aiguilletage, ont été de préférence extraites d'une botte desdites fibres de renfort dans un mélange avec d'autres fibres de liaison thermoplastiques ayant un point de ramollissement à température plus faible que celui desdites fibres de renfort, par des barbes d'aiguilles d'un métier et ensuite sélectivement amenées jusqu'à la deuxième surface de ladite pièce, et dans lequel une première surface de la pièce est formée de manière prédominante de telles autres fibres de liaison à point de ramollissement à température faible, dont au moins une partie a été ramollie et redurcie afin de les réunir par fusion entre elles et auxdites fibres de renfort pour au moins ancrer partiellement les fibres de renfort, et dans lequel les fibres de liaison à point de ramollissement à température faible sont activables pour lier la première surface (62) de ladite pièce (30) à la surface arrière (14) dudit matériau de substrat (10) sans écoulement de matière et à une température utilisée pour former à chaud ledit matériau de substrat afin de fixer ladite partie de base (20, 28, 30) audit matériau de substrat (10) pendant son formage à chaud.

9. Dispositif selon la revendication 2, dans lequel le moyen adhésif comprend une feuille en fibres aiguilletées non tissées (60) ayant une première et une deuxième surface et prenant en sandwich ladite partie de base entre la première surface de ladite feuille et la surface arrière dudit matériau de substrat, ladite feuille définissant une ouverture centrale ayant une largeur suffisante pour être traversée par ladite partie de fixation de ladite fixation, mais cependant suffisamment étroite pour permettre à ladite feuille de recouvrir ladite partie de base, ladite feuille comprenant une zone enrichie de fibres à faible point de fusion située à proximité de ladite première surface et activable pour lier la première surface de ladite feuille à la surface arrière dudit matériau de substrat (10) sans écoulement de matière et une température utilisée pour former à chaud ledit matériau de substrat pour fixer ladite partie de base audit matériau de substrat.

10. Procédé de fixation d'un dispositif de fixation (24) sur la surface arrière (14) d'un composant textile formable à chaud formé à partir d'un matériau de substrat (10) au moyen de demi-moules appariés, ledit dispositif de fixation (24) ayant partie de base (20, 28, 30) avec des surfaces avant et arrière et une partie de raccordement (22) s'étendant de ladite partie de base (20), ledit procédé comprenant les étapes de création d'une partie évidée (56) dans la surface de moulage (58, 60) dudit demi-moule (52) chargé de former la surface arrière du composant formable à chaud, ladite partie évidée étant dimensionnée et formée pour recevoir ledit dispositif de fixation (20), positionnant ledit dispositif de fixation (20) à l'intérieur de ladite partie évidée (56) avec la surface arrière de ladite partie de base (20, 28, 30) orientée vers l'extérieur de ladite surface de moulage (56, 60), en plaçant les moyens adhésifs activables à chaud (60 ou 80) à l'intérieur dudit évidement, en chauffant ledit matériau de substrat (10), en formant à chaud ledit matériau de substrat chauffé (10) entre lesdits demi-moules (50, 52), qui sont refroidis, pour former ledit composant textile de manière à ce que la chaleur latente dudit composant ramollisse et active lesdits moyens adhésifs (60 ou 80) pour fixer la surface arrière de ladite partie de base du dispositif de fixation (20, 28, 30) contre la surface arrière (14) dudit composant, et en refroidissant ledit composant formé à chaud et les dits moyens adhésifs (60 ou 80) dans le moule pour fixer l'adhésif et attacher solidement ledit dispositif de fixation (20) audit composant et en enlevant ensuite lesdits demi-moules (50, 52).

11. Procédé selon la revendication 10, dans lequel ledit moyen adhésif (60) comprend une pièce de fibres non tissées, de préférence aiguilletées et thermofixées, ayant une première surface enrichie de fibres de liaison à faible point de fusion, ladite pièce (60) ayant une ouverture centrale traversée par ladite partie de raccordement (20, 32), et dans laquelle ladite pièce (60) est placée à l'intérieur dudit évidement (56) avec ladite première surface orientée vers l'extérieur avant le positionnement dudit dispositif de fixation (20) dans ledit évidement (56) afin de placer en sandwich ladite partie de base (20, 28, 30) entre ladite pièce (60) et ledit matériau de substrat (10) lors du formage à chaud dudit matériau de substrat (10), la chaleur latente dudit matériau de substrat (10) ramollissant et réactivant la surface enrichie de ladite pièce (60) sans écoulement de matière pour lier ladite pièce (60) audit composant.

12. Procédé selon la revendication 11, dans lequel ladite pièce (60) est thermoplastique et activable à la chaleur à des températures de formage à chaud avant liaison et présente un point de ramollissement suffisamment élevé après liaison pour empêcher l'écoulement à des températures jusqu'à environ 121,1°C (250°F).

13. Dispositif selon la revendication 1 ou procédé selon la revendication 10, dans lesquels ledit moyen adhésif comprend une quantité réelle d'une matière adhésive thermofusible sur la surface arrière de ladite partie de base pour réactivation par la chaleur latente dudit substrat pour collage entre ladite partie de base du dispositif de fixation et ledit composant formé à chaud.

14. Dispositif selon la revendication 1 pour fixer le matériau de substrat formé à chaud (10) ayant des surfaces avant (12) et arrière (14) sur un cadre porteur dans lequel le moyen adhésif comprend une feuille en fibres aiguilletées non tissées (60) comprenant un mélange de fibres de liaison à faible point de fusion et de fibres de renfort ayant un point de fusion supérieur à celui desdites fibres de liaison, la feuille (60) ayant une première surface (62) et une deuxième surface (63), ladite partie de base (20) étant prise en sandwich entre la première surface (62) de ladite feuille (10) et la surface arrière (14) dudit matériau de substrat (10), ladite feuille définissant une ouverture centrale ayant une largeur suffisante pour pouvoir être traversée par ladite partie de fixation (22), mais cependant suffisamment étroite pour permettre à ladite feuille de recouvrir ladite partie de base (20, 28, 30), ladite feuille (60) comprenant une zone enrichie de fibres de liaison à faible point de fusion placée à proximité de ladite première surface (62) et activable pour lier la première surface (62) de ladite feuille (60) à la surface arrière (14) dudit matériau de substrat (10) sans écoulement de matière et à une température utilisée pour former à chaud ledit matériau de substrat afin de fixer ladite partie de base (20, 28, 30) audit matériau de substrat (10), et lesdites fibres de liaison à faible point de fusion étant ramollies et redurcies afin de les unir entre elles et aux fibres de renfort ainsi qu'au matériau de substrat (10) pour lier ladite feuille (60) audit matériau de substrat (10).
